# EUROPÄISCHE PATENTSCHRIFT

(11) **EP 1 675 722 B1**
(45) Veröffentlichungstag und Bekanntmachung des Hinweises auf die Patenterteilung: **25.04.2012**
(21) Anmeldenummer: 04764844.9
(22) Anmeldetag: 04.09.2004
(51) Int. Cl.: B32B 27/32, B65D 65/40

(54) **ARZNEIMITTELBLISTERVERPACKUNG**
PHARMACEUTICAL BLISTER PACKAGE
EMBALLAGE-COQUE POUR MEDICAMENT

(30) Priorität: 18.09.2003 DE 10343668
(43) Veröffentlichungstag der Anmeldung: 05.07.2006
(73) Patentinhaber: Boehringer Ingelheim International GmbH, 55216 Ingelheim am Rhein (DE); Boehringer Ingelheim Pharma GmbH & Co. KG, 55216 Ingelheim am Rhein (DE)
(72) Erfinder: SPALLEK, Michael, 55218 Ingelheim am Rhein (DE); METZGER, Burkhard, 55218 Ingelheim (DE)
(74) Vertreter: Hammann, Heinz
(86) Internationale Anmeldenummer: PCT/EP2004/009893
(87) Internationale Veröffentlichungsnummer: WO 2005/035245

(56) Entgegenhaltungen:
- US-A- 5 150 793
- US-A- 5 244 091
- US-A- 5 624 036
- US-A- 6 010 784
- DATABASE WPI Section Ch, Week 200110 Derwent Publications Ltd., London, GB; Class A92, AN 2001-084677 XP002314557 & JP 2000 313474 A (FUMAKILA KK) 14. November 2000 (2000-11-14)

## Beschreibung

Die vorliegende Erfindung betrifft einen neuen Arzneimittelblister mit reduzierter Wasserdampf- und Gaspermeabilität. Erfindungsgemäß wird vorgeschlagen, herkömmliche Blister mit einer Siliziumoxid-haltigen Funktionsschicht gegen Gase, Wasserdampf sowie organische Moleküle zu beschichten.

### Stand der Technik

Aus US.6.010.784 sind Blisterverpackungen auf Papierbasis bekannt, die für die Verpackung von Lebensmitteln, pharmazeutischen Erzeugnissen etc. zur Anwendung kommen können. Auf diese Papierschicht wird zur Außenseite eine bedruckbare Schicht aus Calciumcarbonat, Titandioxid etc. aufgetragen, die die Papierfläche glättet und bedruckbar macht, jedoch keine Barrierewirkung gegen Feuchtigkeit entfaltet, wie dies bei Folien der Fall ist.

JP 19990123663 offenbart eine Verpackung für die Lagerung von chemischen Lösungen. Die Verpackung besteht aus einer Schicht aus mehrschichtigem Papier, welches dann beschichtet wird. Dieses Papier wird mit Kunstharz beschichtet, um so eine Dampfbarriere zu bilden, damit der Dampf nicht aus der Lösung und weiterhin nach Außen entweicht.

Arzneimittelblister als Verpackungen für pharmazeutische Formulierungen dienen dazu, Tabletten, Kapseln oder andere Formen von Arzneimitteln sicher zu verpacken und vor Umwelteinflüssen von Außen zu schützen, die unter Umständen die pharmazeutische Qualität der Formulierung beeinflussen können. In diesem Zusammenhang muss besonders Wasser oder Wasserdampf erwähnt werden. Dringt Wasser in das Innere eines Blisters ein, kann dies nachhaltig zu einer Veränderung der pharmazeutischen Qualität des darin gelagerten Arzneimittels führen. Auch besteht die Gefahr, dass flüchtige Stoffe im Laufe der Lagerung aus dem Füllgut im Inneren des Blisters heraus diffundieren und dadurch die pharmazeutische Formulierung verändern. Außerdem müssen die Blister so beschaffen sein, dass in Ihrem Inneren die atmosphärischen Bedingungen konstant gehalten werden, z.B. für Inhalationspräparate um deren Partikelgrößenverteilung nicht zu verändern.

Typische Blister bestehen aus wenigstens zwei Folien, die ihrerseits aus mehreren Schichten verschiedener oder gleicher Materialien aufgebaut sein können. Dabei handelt es sich zum einen um eine Bodenschicht bzw. Bodenfolie. Zum anderen handelt es sich um eine Deckschicht oder Deckfolie.

In der Bodenfolie können eine oder mehrere Wannen ausgebildet sein, in die die pharmazeutische Formulierung, Tablette(n) oder Kapsel(n) eingelegt wird (werden). Die Deckfolie wird auf die Bodenfolie aufgelegt und an dieser fixiert. Zumindest an den Randstellen werden dann die beiden Schichten miteinander dicht verbunden, z.B. durch Verkleben.

Die Folien sind in der Regel aus Kunststoff oder Metall hergestellt. Andere Materialien, wie z.B. Papier, können ebenfalls (ggf. zusätzlich) verwendet werden.

Bevorzugte Blister bestehen aus transparentem oder zumindest translucentem Kunststoff oder aus einer Bodenfolie aus transparentem Kunststoff und einer Deckfolie aus Aluminium. Beide Folien können dabei Laminate sein, d.h. aus mehreren Folien verschiedener Materialien bestehen. Die aus dem Stand der Technik bekannten Blister schützen eine darin eingebettete Formulierung nicht zwangsläufig ausreichend vor dem Eintritt von Stoffen von Außen, wie z.B. Gase bzw. Dämpfe, insbesondere gegen Sauerstoff, Kohlendioxid, Wasserdampf, und Lösungsmittel auch wenn sie mechanisch unversehrt sind. Prinzipiell können diese Stoffe über die obere Seite des Blisters (Deckfolie), die Unterseite (Bodenfolie) oder durch die Nahtstelle zwischen der Deck- und Bodenfolie durch permeieren oder diffundieren.

Um dieses Problem anzugehen, werden im Stand der Technik bevorzugt Blister verwendet, die nur aus Aluminiumfolien oder Aluminiumfolienlaminaten bestehen. Solche Blister sind jedoch nicht mehr transparent und machen eine Inspektion des Blisterinhaltes vor dem Öffnen z.B. nach dem Befüllprozeß nahezu unmöglich. Deshalb werden für transparente Blister spezielle Kunststoffe mit hohen Sperreigenschaften verwendet. In den meisten Fällen besitzen jedoch derartige spezielle Kunststoffe nur ausreichende Gasbarriereeigenschaften gegen bestimmte Gase, z.B. entweder gegen Wasserdampf oder gegen Sauerstoff, so dass auch diese Maßnahme nicht ausreichend zufrieden stellend sind.

Aus anderen Gebieten des Standes der Technik bekannte Verfahren zur Verbesserung der Barriere gegen unerwünschte Diffusion von Stoffen, wie z.B. die chemische Modifizierung von Kunststoffoberflächen von Benzintanks durch Sulfonierung oder Fluorierung hat für Verpackungen von Arzneimitteln keine Bedeutung erlangt, da hier wiederum umfangreiche Toxizitäts- und Stabilitätsuntersuchungen notwendig werden. Ebenfalls Stand der Technik sind SiOx-beschichtete Laminatfolien, die sich jedoch wegen der SiOx-Schicht nicht verformen lassen, so dass eine Blisterherstellung nicht möglich ist.

Um bei starren Kunststoffbehältern eine breite Sperrwirkung gegen Gase, Wasserdampf und organische Lösungsmittel zu erhalten, ist es bekannt, den Kunststoffbehälter mit einer Beschichtung aus speziellen organischen und anorganischen Materialien zu versehen. In diesem Zusammenhang wird auf den Aufsatz: "Multilayer Barrier Coating System produced by Plasma-impulse Chemical Vapor Deposition (PICVD)", von M. Walther, M. Heming, M. Spallek, veröffentlicht in "Surface and Coatings Technology" 80 (1996), S. 200-205 verwiesen, der starre Kunststoffbehälter mit einer SiOxCyHz- bzw. TiOxCyHz-Schicht als Barriere-Schicht offenbart. Dabei erfolgt die Beschichtung nach dem PICVD-Verfahren (Plasma-Impuls-Chemical-Vapor-Deposition), welches z.B. durch die DE 40 08 405 C1 sowie durch die US-A-5,154,943 bekannt geworden ist.

Vergleichbare Verfahren sind für Arzneimittelblister bisher nicht bekannt.

### Beschreibung der Erfindung

Es ist daher eine Aufgabe der Erfindung einen transparenten, flexiblen, siegelbaren Blister
1) mit verbessertem Schutz vor Gas- und Feuchtigkeitsaustausch zwischen dem Inneren des Blisters und der Außenumgebung,
2) mit ausreichender Transparenz / Transluzenz für optische Kontrolle und
3) ausreichender mechanischer Stabilität um bei Verbiegen / Verwenden des Blisters nicht abzublättern
zu schaffen.

Dabei sollen aus dem Stand der Technik bekannten Nachteile überwunden werden.

### Beschreibung der Erfindung im Detail

Erfindungsgemäß wird vorgeschlagen, die aus Kunststoff bestehende Boden- und/oder die Deckfolie eines Arzneimittelblisters zusätzlich mit einer Siliziumoxid-haltigen Funktionsschicht zu beschichten, um dadurch die oben benannte Gaspermeabilität des eigentlichen Blisters zu reduzieren.

Besteht eine Folie des Blisters aus Aluminium (vorzugsweise Deckfolie) so genügt die Beschichtung der vorzugsweise transparenten oder tansluzenten Kunststofffolie (vorzugsweise Bodenfolie, da Kunststofffolien einfacher verformt werden können als Metallfolien).

Als Blistermaterial für die Kunststofffolien können PVC (Polyvinylchlorid), COP (Cycloolefinpolymer, CZ®), COC (Cycloolefin- Copolymer, z.B. Topas®), Polychlorotrifluorethylen (z.B. ACLAR®), Polyethylen (z.B. als high density Polyethylen oder low density Polyethylen), Polypropylen, Polyethylenterephthalalt, Polybuten und Polymethylpenten, Polycarbonate, Polyester, Polyacrylate, Polyamide oder andere Kunststoffe verwendet werden.

Eine Folie kann also aus mehreren Schichten des gleichen Materials bestehen oder aus zwei oder mehreren Schichten verschiedener Materialien (Laminate).

Ein Blister kann aus mehreren Folien des gleichen Materials bestehen oder aus zwei oder mehreren Schichten verschiedener Materialien.

Typischerweise besteht der erfindungsgemäße Blister aus einer planen Deckfolie aus Aluminium, die die verformte (Tiefzieh-) Folie zur Aufnahme des pharmazeutischen Produktes aus Kunststoff verschließt. Diese (Tiefzieh-) Folie (Bodenfolie) wird im vorliegenden Kontext auch Wannenfolie genannt, da in der Folie typischerweise Wannen oder Näpfe zur Aufnahme der pharmazeutischen Formulierung ausgebildet sind. Unter der (Tiefzieh-) Folie zur Aufnahme des pharmazeutischen Produktes kann als weitere Folie erneut eine Aluminiumfolie ausgebildet sein, um den Eintritt von Wasser durch die Folie in die (Tiefzieh-) Folie zur Aufnahme des pharmazeutischen Produktes zu verhindern und dadurch den Kontakt der pharmazeutischen Formulierung mit Wasser zu minimieren. Die beiden Aluminiumfolien können ihrerseits durch weitere Kunststoff- und/oder Papierschichten bedeckt sein, so dass dem Blister eine erhöhte mechanische Stabilität verliehen wird oder die Bedruckung vereinfacht wird.

Erfindungsgemäß kann auf jeder der genannten Kunststoff-Folien die erfindungsgemäße Funktionsschicht aufgetragen werden.

Bevorzugt wird die Funktionsschicht auf einer der nahe dem Arzneimittel liegenden Folien aufgetragen, sofern diese Option besteht. Bevorzugt auf der Seite der Folie, die dem Arzneimittel zugewandt ist. Damit die Funktionsschicht nicht unmittelbar in Kontakt mit dem Arzneimittel steht, kann auf die Funktionsschicht noch eine Abdeckschicht aufgetragen werden. Die Funktionsschicht wird bevorzugt nach der Verformung der Bodenfolie, d.h. nach Einformen der Wannen aufgebracht.

Dadurch wird es möglich, das Material des Blisters speziell auf die Inhaltsstoffe und die Materialien für die Funktionsschicht speziell auf die geforderte Barrierewirkung, Transparenz und mechanische Stabilität abzustellen.

Der Blister mit wenigstens einer gemäß der Erfindung beschichteten Kunststofffolie wird dann wie aus dem Stand der Technik bekannt, fertig gestellt. D.h. die Wannen in der Bodenfolie werden mit dem Arzneimittel befüllt, anschließend werden alle Folien übereinander bzw. untereinander in Position gebracht und die einzelnen Folien werden dann miteinander verschweißt oder verklebt. Als Verbindungsmaterial kann hierfür z.B. ein Heißsiegellack verwendet werden, z.B. auf Basis eines Polyacrylats und/oder Polyethylens (z.B. high density und/oder low density Polyethylen), der typischerweise auf der Deckfolie aufgebracht ist. Dabei kann sich die Funktionsschicht über die gesamte Fläche der entsprechenden Kunststofffolie des Blisters erstrecken, so dass ein Teil der Funktionsschicht in die Schweiß- oder Klebenaht eingebaut ist oder die Bereiche der Kunststofffolie des Blisters, die die Schweiß- oder Klebenaht des Blisters bilden, sind frei von der Funktionsschicht.

Durch die Funktionsschicht ist man bei der Wahl des Kunststoffmaterials für den Blister weitgehend frei, um anderen Randbedingungen, wie z.B. Lichtempfindlichkeiten, Farbkodierungen etc. Genüge zu tun.

Die Siliziumoxid-haltigen Funktionsschicht kann auf der Innenseite der Deckenschicht, der Innenseite der Bodenschicht, bzw. der die Wannen bereitstellenden Schicht oder auf mehrere dieser Schichten aufgetragen werden.

Die Dicke der Funktionsschicht liegt im nm-Bereich (2- 500 nm), je nach Anwendung, insbesondere im Bereich von 20 bis 500 nm.

Bei der Siliziumoxid-haltigen Funtionsschicht handelt es sich bevorzugt um eine Schicht, deren chemische Zusammensetzung über die Schichtdicke variiert und als bevorzugte weitere Elemente Kohlenstoff und / oder Wasserstoff und / oder Titan enthält.

Bevorzugt handelt es sich bei der Sperrschicht um eine kohlenstoffhaltige Siliziumoxidschicht, die durch die chemische Formel SiOₓC_{y} gekennzeichnet ist, wobei sich die Werte von x,y, über die Schichtdicke ändern. Die Schicht kann als Verunreinigung zusätzlich Wasserstoff enthalten, so dass sich die Summenformel zu SiOₓC_{y}H_{z} ergibt, wobei der Wasserstoffanteil möglichst gering gehalten wird (z gegen 0). Zur Kunststofffolie hin enthält die Schicht einen höheren Kohlenstoffanteil C:Si-Verhältnis 1:0.5 bis 1:5 das in Si-reichere Bereiche (C:Si bis 1:10) übergeht um dann wieder in Si ärmere Bereiche (C:Si bis 1:0.2) überzugehen.

Diese zuletzt genannte Schicht (sehr C-reiche Schicht) ist im bevorzugtesten Fall siegelfähig, bis zu einem C:Si-Verhältnis von 1:0.2 sind die Schichten noch ausreichend transparent.

Efindungsgemäß handelt es sich bei der Sliziumoxid-haltigen Folie im einfachsten Fall um eine zweischichtige Folie der Abfolge 1) SiOₓC_{y}H_{z} und 2) einer kohlenstoffärmeren Schicht, idealerweise einer SiO₂-Schicht Bei der SiOₓC_{y}H_{z}-Schicht wird der Wasserstoffanteil möglichst gering gehalten (z gegen 0). Die kohlenstoffärmere Schicht kann auch als SiO_{x'}C_{y'}H_{z'}-Schicht bezeichnet werden, wobei die Werte x' gegen 2, y' gegen 0 und z' gegen 0 tendieren. Der Einfachheit halber wird jedoch im Rahmen dieser Erfindungsbeschreibung nur von einer SiO₂-Schicht gesprochen.

In einer anderen Ausführungsform wird diese Schichtenabfolge um einen weiteren Schichtanteil SiOₐC_{b}H_{c} ergänzt, so dass die SiO₂-Schicht bevorzugt zwischen dieser und der SiOₓC_{y}H_{z}-Schicht liegt. Dadurch wird die mechanische Stabilität der Funktionsschicht, insbesondere diejenige der SiO₂-Schicht, beim Verbiegen des Blisters und die Versiegelbarkeit der Funktionsschicht mit Hilfe von Heißsiegellacken verbessert. Die SiOₐC_{b}H_{c}-Schicht ist analog der SiOₓC_{y}H_{z} -Schicht aufgebaut, wobei der Werte a sich vom Wert x geringfügig unterscheiden kann, d.h. sie sind nicht zwingend identisch, liegen aber in einer ähnlichen Größenordnungen. Das Gleiche gilt für die analogen Wertepaare y und b, sowie z und c. Auch in SiOₐC_{b}H_{c}-Schicht wird der Wasserstoffanteil möglichst gering gehalten (c gegen 0). Eine solche Funktionsschicht ist bevorzugt, so dass sich hier die Schichtabfolge SiOₓC_{y}H_{z}; SiO₂; SiOₐC_{b}H_{c} ergibt. Damit nimmt bei einer dermaßen aufgebauten, Sandwich-artigen Funktionsschicht das C:Si-Verhältnis zur Schichtmitte hin idealerweise bis zum Vorliegen einer SiO₂-Teilschicht ab, während die beiden nach außenliegenden Schichtteile SiOₓC_{y}H_{z} und SiOₐC_{b}H_{c} ein höheres C:Si-Verhältnis aufwiesen. Durch diese spezielle und erfindungsgemäß bevorzugte Schichtabfolge wird zum einen eine hohe Sperrfunktion für Gase und Dämpfe verwirklicht (hauptsächlich durch die kohlenstoffarme innere Teilschicht), während die die beiden äußeren Schichten SiOₓC_{y}H_{z} und SiOₐC_{b}H_{c} gute Haft- bzw. Siegeleigenschaften der Funktionsschicht gewährleisten.

Damit kann die Funktionsschicht die angestrebte Sperrfunktion ausüben, wobei der Bereich, der einen hohen Si-Anteil aufweist, d.h. der Bereich mit einem geringen C:Si-Verhältnis, die Sperrfunktion hauptsächlich übernimmt.

Wie bereits angedeutet handelt es sich in der Praxis bevorzugt auch nicht um eine zwei- oder dreischichtige Abfolge mit scharf voneinander abzugrenzenden Teilschichten, sondern die einzelnen Schichten gehen ineinander über. Eine solche Schichtenabfolge kann auch als Multi-Gradientenschicht bezeichnet werden.

In alternativen Ausführungsformen kann in einzelnen Schichten anstelle von Si oder zusätzlich dazu Ti eingesetzt werden. Analog kann die SiOₓC_{y}H_{z}- und/oder die SiO₂ - und/oder die SiOₐC_{b}H_{c} -Schicht teilweise oder vollständig gegen eine TiOₓC_{y}H_{z} - bzw. TiO₂- bzw. TiOₐC_{b}H_{c} -Schicht ausgetauscht werden oder eine solche zusätzlich eingebaut werden.

Erfindungsgemäß wird die Funktionsschicht vorzugsweise nach dem PICVD-Verfahren (Plasma Impuls Chemical Vapor Deposition) oder dem PECVD-Verfahren (Plasma Enhanced Chemical Vapor Deposition) aufgebracht. Dieses Verfahren gewährleistet überraschenderweise eine hinreichend gleichförmige Beschichtung der Blisterfolie(n)fläche, insbesondere der Wannen- oder Tiefziehfolie, die durch die Vielzahl der Kavitäten an sich eine recht komplexe Geometrie besitzt.

Die Beschichtung der Blisterfolien mit einer Siliziumoxid-haltigen Funktionsschicht der Schichtabfolge SiOₓC_{y}H_{z} ; SiO₂ und ggf. SiOₐC_{b}H_{c} mit oder ohne den Austausch von Si gegen Ti kann analog dem aus dem Stand der Technik bekannten Verfahren durchgeführt werden. In diesem Zusammenhang wird auf den Aufsatz "Multilayer barrier coating System produced by plasma-impulse chemical vapor deposition (PICVD), von M. Walther, M. Heming, M. Spallek", veröffentlicht in "Surtace and Coatings Technology" 80 (19%) S. 200-205 verwiesen. Auch wird auf die DE 40 08 405 C1 sowie durch die US-A-5,154,943 verwiesen.

Das Aufbringen der Funktionsschicht kann auf alternativ durch Sputtering (Sputtern) erfolgen. Es wird wiederum auf den Stand der Technik verwiesen. Vorzugsweise erfolgt jedoch die Beschichtung nach dem PICVD-Verfahren.

Das Prinzip der Beschichtung gemäß dem PICVD-Verfahren lässt sich wie folgt darstellen. In einer Vakuumkammer befindet sich die zu beschichtende Blisterfolie. Die Vakuumkammer, die als Reaktionskammer dient, kann mittels einer Vakuumpumpe entlüftet werden, z. B. auf einen Druck von 0,3 mbar. Oberhalb der Vakuumkammer und getrennt durch ein Mikrowellenfenster befindet sich eine Horn-Mikrowellenantenne. Über diese Mikrowellenantenne wird eine Mikrowellenstrahlung impulsweise in die Vakuumkammer geleitet. Dabei bildet sich im Innern der Vakuumkammern ein Mikrowellenplasma. Die Impulsdauer ist dabei ein zusätzlicher Parameter, der die Zusammensetzung der abgeschiedenen Schicht beeinflusst.

Die Mikrowellenimpulse, deren Dauer im Bereich von 0,1 bis 10 ms liegt, werden von einem Mikrowellengenerator erzeugt, der über ein Magnetron mit der Mikrowellenantenne verbunden ist. Die Mikrowellen-Anordnung besitzt typischerweise Standard-Komponenten der 2,45 GHz-Technologie.

Über eine (oder mehrere) Gaszuführ-Anordnung wird sowohl das Gas, in welchem ein Plasmabogen gezündet wird, typischerweise Sauerstoff sowie Inertgase (z. B. Stickstoff, Argon, Helium, Wasserstoff), als auch das zur Schichtbildung notwendige Gas, das Reaktionsgas, eingeleitet. Typischerweise können über metall-organische Reaktionsgase, wie Hexamethyldisiloxane (HMDSO) oder Titantetraisopropoxide (TIPT), aus denen über die Wahl einer geeigneten Impulsdauer die Schichten SiOₓC_{y}H_{z} bzw. TiOₓC_{y}H_{z} etc. aufgebaut werden.

Dabei wird zunächst aus einer Zufuhranordnung die Mischung aus Sauerstoff und dem Reaktionsgas in die Vakuumkammer eingeleitet. Danach wird durch einen Mikrowellenimpuls ein Plasma in der Vakuumkammer gezündet, das die Moleküle des Reaktionsgases spaltet. Die dabei entstehenden Crack-Produkte diffundieren zur nächst gelegenen Oberfläche, also der Blisterfolie und bauen nach und nach den ersten Teilbereich der gewünschte Sperrschicht auf. In der Impulspause bis zur Zündung des nächsten Impulses, die im Bereich von 100 ms liegt, werden jeweils die verbrauchten Reaktionsgase aus der Vakuumkammer nach Art eines Zweitakt-Motors durch Absaugen entfernt und durch frisches Reaktionsgas und Sauerstoff ersetzt.

Um eine Mehrfachschicht zu erzeugen, wird, sobald die erste Teilschicht aus SiOₓC_{y}H_{z}, erreicht ist, das entsprechende Reaktionsgas - hier Hexamethyldisiloxan (HMDSO) - durch das zur Erzeugung der nächsten Teilschicht notwendige Reaktionsgas ersetzt, bzw. es wird das Verhältnis des Reaktionsgases zu Sauerstoff verändert oder durch die Plasmatemperatur wird korrigiert. Zur Erzeugung eines unscharfen Überganges zwischen diesen Teilschichten kann z.B. für einen gewissen Zeitraum ein Gemisch aus beiden Reaktionsgasen eingeleitet werden. Für gleichmäßige Übergänge kann man dabei den Anteil des ersten Reaktionsgases vermindern und gleichzeitig den Anteil des zweiten Reaktionsgases stetig bis auf den Nennwert erhöhen.

Soll die Funktionsschicht auch Titan (Ti) enthalten, kann als Reaktionsgas z.B. Titantetraisopropoxid (TIPT) eingesetzt werden.

Im Folgenden soll der erfindungsgemäße Arzneimittelblister anhand von Figuren näher erläutert werden.

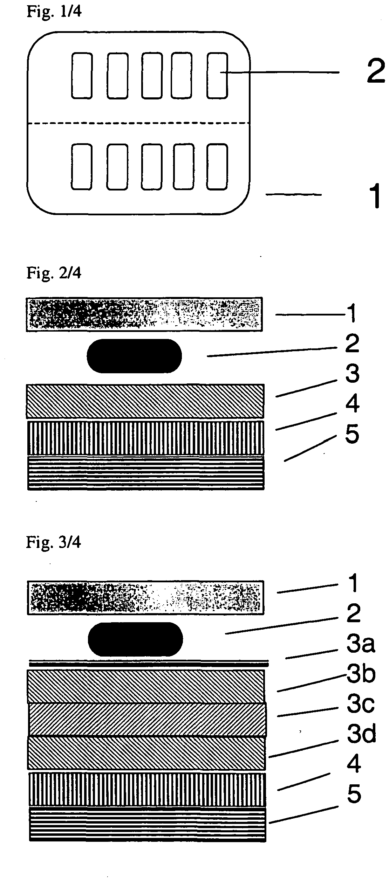

In Figur 1 ist ein im Rahmen der vorliegenden Erfindung typischer Blister (1) mit mehreren Näpfen/Kavitäten (2) in Draufsicht dargestellt.

Fig. 2 zeigt schematisch das Prinzip der Erfindung in vereinfachter Darstellung (ohne Napf /Wanne). Eine Deckfolie (1) aus Aluminium bedeckt die Arzneimittelkapsel (2) die nach unten von der Funktionsschicht (3), die auf eine PVC-Verbundfolie (4) / Aclar (5) aufgebracht ist.

Fig. 3 zeigt schematisch das Prinzip der Erfindung in einer komplexeren Ausführungsform. In diesem Fall ist die Funktionsschicht (3) in einer komplexeren Ausführungsform dargestellt. Die Arzneimittelkapsel (2) wird gegenüber der Funktionsschicht (3) durch eine Siegelschicht (3a) geschützt. Die Funktionsschicht (3) besteht aus drei weiteren Schichten, nämlich einer SiOₐC_{b}H_{c}-Schicht (3b), einer SiO₂-Schicht (3c); und einer SiOₓC_{y}H_{z}-Schicht (3d), aufgebracht auf die transparente PVC (4)-Aclar(5)-Verbundfolie.

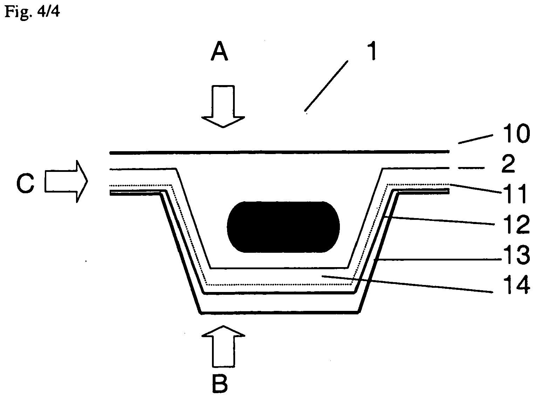

Fig. 4 zeigt einen Blister im Querschnitt, wobei nur ein Napf (2) dargestellt ist.

Der Blister besteht aus einer Deckfolie (10) aus Aluminium, dann z.B. einer Tiefziehfolie mit mehreren nicht miteinander verbunden Näpfen (2) zur Aufnahme des pharmazeutischen Produktes, einer unteren Wannenfolie (12) mit einer Sperrschicht (11) und der Schutzschicht (13) um die Wannenfolie (12).

Die Pfeile A zeigen auf die Deckschicht (10) und sollen den Diffusionsweg von Feuchtigkeit durch die Deckschicht darstellen.

Die Pfeile B zeigen auf die bodenseitigen Schicht (12, 13, 14) und sollen den Diffusionsweg von Feuchtigkeit durch die Bodenschicht darstellen.

Der Pfeil C zeigt auf die Verbindungsstelle zwischen der Deck- und der Bodenfolie und den Weg, den Feuchtigkeit durch diesen Bereich des Blisters nehmen kann.

Jeder der Schichten, insbesondere die Schichten (12) oder (13), kann mit der erfindungsgemäßen Sperrschicht beschichtet sein.

Im Rahmen der vorliegenden Erfindung sind Blister mit folgender Schichtenabfolge bevorzugt:

Eine Deckfolie bestehend aus einer ersten Deckfolie (d.h. äußerste Deckfolie) aus Papier (20 bis 100 g/m²) oder Lack (0,5 bis 3 g/m²), eine darunter befindliche zweite Deckschicht aus Polyethylenterephthalat, bevorzugt in einer Dicke von 5 bis 20 Mikrometer, stärker bevorzugt 10 bis 15 Mikrometer, und schließlich eine Schicht aus Aluminiumfolie in einer bevorzugten Stärke von 10 bis 60 Mikrometer, bevorzugt 10 bis 50 Mikrometer und ganz bevorzugt 15 bis 40 Mikrometer.

Darunter ist die Folie zur Aufnahme des pharmazeutischen Produktes angeordnet, die z.B. aus einer vierschichtigen Folie in einer bevorzugten Dicke von 30 bis 500 Mikrometer, besonders bevorzugt 60 bis 300 Mikrometer ausgebildet ist. Diese Folie besteht zunächst aus einer gegenüber dem pharmazeutischen Produkt versiegelten Funktionsschicht von bevorzugt 20 bis 500 nm Dicke, die auf der produktberührenden Seite auf eine PVC-Folie aufgebracht ist, deren Dicke bevorzugt 10 bis 200 Mikrometer, besonders bevorzugt 35 bis 70 Mikrometer beträgt, dann aus einer Aluminiumfolie, deren Dicke bevorzugt 30 bis 60 Mikrometer, besonders bevorzugt 35 bis 50 Mikrometer beträgt. Diese Aluminiumschicht ist wiederum bedeckt von einer Schicht aus Polyamid mit einer bevorzugten Stärke von 10 bis 40 Mikrometer, besonders bevorzugt 20 bis 30 Mikrometer.

Dabei können einzelne Schichten, z.B. die Papierschicht weggelassen werden. Evtl. notwendige Heißsiegellacke oder Haftvermittler werden der Einfachheit halber hier nicht berücksichtigt.

Der am stärksten bevorzugte Blister besteht aus zwei Folien. Zunächst einer Deckfolie aus einer Aluminiumverbundfolie (bevorzugte Dicke 38 Mikrometer), dann aus einer Bodenfolie aus PVC (bevorzugte Dicke 250 Mikrometer), mit Arzneimittel-seitig aufgebrachter Siliziumoxid-haltiger Funktionsschicht (bevorzugte Dicke 20 bis 500 nm). Erfindungsgemäß können diese Folien so verschweißt werden, dass die Aluminiumfolie auf der Seite der Kunststofffolie verschweißt oder verklebt wird, die die erfindungsgemäße Funktionsschicht trägt. Bevorzugt ist Aluminiumfolie über die Funktionsschicht mit der Kunststofffolie verscheißt oder verklebt. Alternativ können die Bereiche der Kunststofffolie des Blisters, die die Schweiß- oder Klebenaht des Blisters bilden, frei von der Funktionsschicht sein, so dass sich die Funktionsschicht nicht in die Schweiß- oder Klebenaht erstreckt.

## Patentansprüche

1. Flexibler und transparenter Arzneimittelblister bestehend aus wenigstens zwei miteinander verschweiß-, und/oder verklebbaren Folien, einer Deckfolie und einer Bodenfolie, wobei mindestens eine dieser Folien eine Kunststoffoberfläche aufweist, auf die eine Siliziumoxid-oder Titanoxid-haltige transparente oder transluzente Funktionsschicht mit Barrierewirkung gegen Gase, Wasserdampf oder organische Substanzen aufgebracht ist, wobei die Funktionsschicht auf ihrer freien Seite ggf. versiegelbar ist.

2. Arzneimittelblister nach Anspruch 1, **dadurch gekennzeichnet, dass** die Funktionsschicht aus wenigstens zwei Teilschichten besteht.

3. Arzneimittelblister nach Anspruch 2, **dadurch gekennzeichnet, dass** die beiden Teilschichten eine SiOₓC_{y}H_{z} -Teilschicht und eine SiO_{x'}C_{y'}H_{z'} - Teilschicht sind, wobei x' größer oder gleich - bevorzugt größer - x ist und bevorzugt gegen 2 strebt, y' kleiner oder gleich - bevorzugt kleiner - y ist und bevorzugt gegen 0 strebt und z' kleiner oder gleich - bevorzugt kleiner - z ist und bevorzugt gegen 0 strebt.

4. Arzneimittelblister nach Anspruch 3, **dadurch gekennzeichnet, dass** die Funktionsschicht mindestens eine weitere SiOₐC_{b}H_{c}-Teitschicht aufweist mit a kleiner oder gleich - bevorzugt kleiner - x' und b größer oder gleich - bevorzugt größer - y' und c größer oder gleich - bevorzugt größer - z', so dass die SiO_{x'}C_{y'}H_{z'} - Teilschicht zwischen der SiOₓC_{y}H_{z} - Teilschicht und der SiOₐC_{b}H_{c}-Teilschicht liegt und die gesamte Abfolge der Funktionsschicht zum Inneren der Schicht das kleinste Verhältnis von C-Atomen zu Si-Atomen aufweist.

5. Arzneimittelblister nach einem der Ansprüche 1 bis 4, **dadurch gekennzeichnet, dass** die SiOₓC_{y}H_{z}-Teilschicht und ggf. die SiOₐC_{b}H_{c}-Teilschicht jeweils schichtweise in sich in unterschiedlichen Stöchiometrien aufgebaut ist (sind).

6. Arzneimittelblister nach einem der Ansprüche 3 bis 5, **dadurch gekennzeichnet, dass** in den einzelnen Teilschichten partiell oder vollständig Si-Atome gegen Ti-Atome ausgetauscht sind oder zusätzliche Teilschichten der Formeln TiOₓC_{y}H_{z} und/oder TiO_{x'}C_{y'}H_{z'} und/oder ggf. TiOₐC_{b}H_{c} mit x, y, z, x', y', z' und ggf. a, b und c in der Definition nach Anspruch 3 oder ggf. in der Definition nach Anspruch 4 eingebaut sind.

7. Arzneimittelblister nach einem der Ansprüche 1 bis 6, **dadurch gekennzeichnet, dass** sowohl die Deckfolie als auch die Bodenfolie eine Kunststoffoberfäche aufweisen, die jeweils mit einer Funktionsschicht bedampft sind.

8. Arzneimittelblister nach einem der Ansprüche 1 bis 7, **dadurch gekennzeichnet, dass** die Kunststoffoberfäche(n) aus einem Kunststoff besteht (bestehen), der (die unabhängig voneinander) ausgewählt ist (sind) aus der Gruppe aus PVC (Polyvinylchlorid), COC (Cycloolefin- Copolymer, z.B. Topas®), Polychlorotrifluorethylen (z.B. ACLAR®), COP (Cycloolefinpolymer, z.B. CZ®), Polyethylen (z.B. als high density Polyethylen oder low density Polyethylen), Polypropylen, Polyethylenterephthalalt, Polybuten und Polymethylpenten, Polycarbonate, Polyester, Polyacrylate oder Polyamid oder Verbunde oder Laminate daraus.

9. Verfahren zum Herstellen eines Arzneimittelblisters nach einem der Ansprüche 1 bis 8, **dadurch gekennzeichnet, dass** die Funktionsschicht durch das PICVD-Verfahren oder das PECVD-Verfahren aufgebracht wird.

10. Verfahren nach Anspruch 9, **dadurch gekennzeichnet, dass** das Verfahren ein vorzugsweise mittels eines Downstream-Plasma unterstütztes CVD-Verfahren ist.

11. Verfahren nach Anspruch 9, **dadurch gekennzeichnet, dass** das Vakuumverfahren ein PICVD-Verfahren mit einer linearen Plasmaquelle und einem kontinuierlichen Durchlauf ist.

12. Verfahren nach einem der Ansprüche 9 bis 11, **dadurch gekennzeichnet, dass** das Licht des Plasmas zugleich zur Keimzahlreduktion des Blisterinhalts verwendet wird.

13. Verfahren nach einem der Ansprüche 9 bis 12, **dadurch gekennzeichnet, dass** die Beschichtung auf die vom Ausformvorgang der Folie noch warme Oberfläche erfolgt.

## Claims

1. Flexible and transparent pharmaceutical blister consisting of at least two foils which can be welded and/or adhesively bonded to one another, a cover foil and a base foil, at least one of these foils having a plastic surface onto which a silicon oxide- or titanium oxide-containing transparent or translucent functional layer with a barrier effect against gases, water vapour or organic substances is applied, the functional layer being optionally sealable on its free side.

2. Pharmaceutical blister according to claim 1, **characterised in that** the functional layer consists of at least two partial layers.

3. Pharmaceutical blister according to claim 2, **characterised in that** the two partial layers are an SiOₓC_{y}H_{z} partial layer and an SiO_{x'}C_{y'}H_{z'} partial layer, wherein x' is greater than or equal to - preferably greater than - x and preferably tends towards 2, y' is less than or equal to - preferably less than - y and preferably tends towards 0 and z' is less than or equal to - preferably less than - z and preferably tends towards 0.

4. Pharmaceutical blister according to claim 3, **characterised in that** the functional layer comprises at least one other SiOₐC_{b}H_{c} partial layer wherein a is less than or equal to - preferably less than - x' and b is greater than or equal to - preferably greater than - y' and c is greater than or equal to - preferably greater than - z', so that the SiO_{x'}C_{y'}H_{z'} partial layer is located between the SiOₓC_{y}H_{z} partial layer and the SiOₐC_{b}H_{c} partial layer and the entire sequence of the functional layer towards the interior of the layer has the smallest ratio of C atoms to Si atoms.

5. Pharmaceutical blister according to one of claims 1 to 4, **characterised in that** the SiOₓC_{y}H_{z} partial layer and optionally the SiOₐC_{b}H_{c} partial layer is or are of laminar construction with inherently varying stoichiometries.

6. Pharmaceutical blister according to one of claims 3 to 5, **characterised in that** in the individual partial layers Si atoms are partially or totally replaced by Ti atoms or additional partial layers of the formulae TiOₓC_{y}H_{z} and/or TiO_{x'}Cy_{'}H_{z'} and/or optionally TiOₐC_{b}H_{c} are incorporated, wherein x, y, z, x',y',z' and optionally a, b and c are defined according to claim 3 or optionally according to claim 4.

7. Pharmaceutical blister according to one of claims 1 to 6, **characterised in that** both the cover foil and the base foil have a plastic surface each of which is vapour-coated with a functional layer.

8. Pharmaceutical blister according to one of claims 1 to 7, **characterised in that** the plastic surface or surfaces consist or consists of a plastic which is or are selected (independently of one another) from the group comprising PVC (polyvinyl chloride), COC (cycloolefin copolymer, e.g. Topas®), polychlorotrifluoroethylene (e.g. ACLAR®), COP (cycloolefin polymer, e.g. CZ®), polyethylene (e.g. as high density polyethylene or low density polyethylene), polypropylene, polyethylene terephthalate, polybutene and polymethylpentene, polycarbonates, polyesters, polyacrylates or polyamide or composites or laminates thereof.

9. Process for producing a pharmaceutical blister according to one of claims 1 to 8, **characterised in that** the functional layer is applied by the PICVD method or by the PECVD method.

10. Process according to claim 9, **characterised in that** the process is a CVD process preferably assisted by a downstream plasma.

11. Process according to claim 9, **characterised in that** the vacuum process is a PICVD process with a linear plasma source and continuous flow.

12. Process according to one of claims 9 to 11, **characterised in that** the light of the plasma is also used at the same time to reduce the bacterial count in the blister contents.

13. Process according to one of claims 9 to 12, **characterised in that** the coating is carried out on the surface which is still warm from the process of shaping the foil.

## Revendications

1. Emballage blister de médicament souple et transparent, se composant d'au moins deux feuilles soudables et/ou pouvant être collées l'une à l'autre, une feuille de couverture et une feuille de fond, sachant qu'au moins une de ces feuilles présente une surface en matière synthétique sur laquelle est appliquée une couche fonctionnelle translucide ou transparente, contenant de l'oxyde de silicium ou de l'oxyde de titane, faisant effet barrière contre les gaz, la vapeur d'eau ou les substances organiques, sachant que la couche fonctionnelle peut être scellée, le cas échéant, sur sa face libre.

2. Emballage blister de médicament selon la revendication 1, **caractérisé en ce que** la couche fonctionnelle se compose d'au moins deux couches partielles.

3. Emballage blister de médicament selon la revendication 2, **caractérisé en ce que** les deux couches partielles sont une couche partielle SiOₓC_{y}H_{z} et une couche partielle SiO_{x'}C_{y'}H_{z'}, sachant que x' est supérieur ou égal - de préférence supérieur à x et tend de préférence vers 2, y' est inférieur ou égal - de préférence inférieur à y et tend de préférence vers 0 et z' est inférieur ou égal - de préférence inférieur à z et tend de préférence vers 0.

4. Emballage blister de médicament selon la revendication 3, **caractérisé en ce que** la couche fonctionnelle présente au moins une couche partielle supplémentaire SiOₐC_{b}H_{c} ayant a inférieur ou égal - de préférence inférieur à x' et b supérieur ou égal - de préférence supérieur à y' et c supérieur ou égal - de préférence supérieur à z', de telle sorte que la couche partielle SiO_{x'}C_{y'}H_{z'} se situe entre la couche partielle SiOₓC_{y}H_{z} et la couche partielle SiOₐC_{b}H_{c} et que la séquence complète de la couche fonctionnelle vers l'intérieur de la couche présente le rapport le plus petit d'atomes de C par rapport aux atomes de Si.

5. Emballage blister de médicament selon l'une quelconque des revendications 1 à 4, **caractérisé en ce que** la couche partielle SiOₓC_{y}H_{z} et, le cas échéant, la couche partielle SiOₐC_{b}H_{c} est ou sont constitué(es), à chaque fois par couche, dans des stoechiométries diverses.

6. Emballage blister de médicament selon l'une quelconque des revendications 3 à 5, **caractérisé en ce que**, dans les couches partielles individuelles, les atomes de Si sont échangés partiellement ou complètement contre des atomes de Ti ou que des couches partielles supplémentaires des formules TiOₓC_{y}H_{z} et/ou TiO_{x'}C_{y'}H_{z'}, et/ou, le cas échéant, TiOₐC_{b}H_{c} avec x, y, z, x', y', z' et, le cas échéant, a, b, et c, sont incorporées dans la définition selon la revendication 3 ou le cas échéant dans la définition selon la revendication 4.

7. Emballage blister de médicament selon l'une quelconque des revendications 1 à 6, **caractérisé en ce que** non seulement la feuille de couverture mais aussi la feuille de fond présentent des surfaces en matière synthétique, qui peuvent être pourvues, à chaque fois, par vaporisation d'une couche fonctionnelle.

8. Emballage blister de médicament selon l'une quelconque des revendications 1 à 7, **caractérisé en ce que** la ou les surface(s) en matière synthétique se compose(nt) d'une matière synthétique, qui est sélectionnée (indépendamment les unes des autres) parmi le groupe formé du PVC (chlorure de polyvinyle), du COC (copolymère de cyclo-oléfines, par exemple Topas ®), du polychlorotrifluoroéthylène (par exemple ACLAR®), du COP (polymère de cyclo-oléfines, par exemple CZ®), du polyéthylène (par exemple en tant que polyéthylène haute densité ou polyéthylène faible densité), du polypropylène, du téréphtalate de polyéthylène, du polybutène et du polyméthylpentène, de polycarbonates, de polyesters, de polyacrylates ou de polyamides ou de composites ou stratifiés de ces derniers.

9. Procédé de fabrication d'un emballage blister de médicament selon l'une quelconque des revendications 1 à 8, **caractérisé en ce que** la couche fonctionnelle est appliquée à l'aide du procédé PICVD ou du procédé PECVD.

10. Procédé selon la revendication 9, **caractérisé en ce que** le procédé est un procédé CVD complété par un plasma en aval.

11. Procédé selon la revendication 9, **caractérisé en ce que** le procédé à vide est une procédé PICVD avec une source de plasma linéaire et un écoulement continu.

12. Procédé selon l'une quelconque des revendications 9 à 11, **caractérisé en ce que** la lumière du plasma est utilisée simultanément pour la réduction des germes du contenu de l'emballage blister de médicament.

13. Procédé selon l'une quelconque des revendications 9 à 12, **caractérisé en ce que** le revêtement se fait sur la surface encore chaude provenant de la procédure de mise en forme de la feuille.
